# EUROPÄISCHE PATENTSCHRIFT

(11) **EP 3 283 853 B1**
(45) Veröffentlichungstag und Bekanntmachung des Hinweises auf die Patenterteilung: **02.08.2023**
(21) Anmeldenummer: 16706205.8
(22) Anmeldetag: 25.02.2016
(51) Int. Cl.: G01F 1/68

(54) **SENSOR ZUR BESTIMMUNG WENIGSTENS EINES PARAMETERS EINES DURCH EINEN MESSKANAL STRÖMENDEN FLUIDEN MEDIUMS**
SENSOR FOR DETERMINING AT LEAST ONE PARAMETER OF A FLUID MEDIUM FLOWING THROUGH A MEASUREMENT CHANNEL
CAPTEUR POUR DÉTERMINER AU MOINS UN PARAMÈTRE D'UN MILIEU FLUIDE S'ÉCOULANT DANS UN CONDUIT DE MESURE

(30) Priorität: 14.04.2015 DE 102015206677
(43) Veröffentlichungstag der Anmeldung: 21.02.2018
(73) Patentinhaber: Robert Bosch GmbH, 70442 Stuttgart (DE)
(72) Erfinder: SOMMER, Edda, 70563 Stuttgart (DE); HAAG, Axel-Werner, 70563 Stuttgart (DE); KONZELMANN, Uwe, 71679 Asperg (DE); HERRMANN, Reinhold, 70469 Stuttgart (DE); MARKOV, Alexander, 70469 Stuttgart (DE); BEYRICH, Hans, 71691 Freiberg/N (DE)
(86) Internationale Anmeldenummer: PCT/EP2016/053938
(87) Internationale Veröffentlichungsnummer: WO 2016/165866

(56) Entgegenhaltungen:
- EP-A1- 2 339 311
- DE-A1-102010 020 264
- DE-A1-102013 212 162
- US-A- 5 631 416
- US-A1- 2012 048 005
- US-A1- 2015 040 653

## Beschreibung

### Stand der Technik

Aus dem Stand der Technik sind zahlreiche Verfahren und Vorrichtungen zur Bestimmung wenigstens einer Strömungseigenschaft fluider Medien, also von Flüssigkeiten und/oder Gasen, bekannt. Bei den Strömungseigenschaften als möglichem Parameter kann es sich dabei um beliebige physikalische und/oder chemische messbare Eigenschaften handeln, welche eine Strömung des fluiden Mediums qualifizieren oder quantifizieren. Insbesondere kann es sich dabei um eine Strömungsgeschwindigkeit und/oder einen Massenstrom und/oder einen Volumenstrom handeln.

Die Erfindung wird im Folgenden insbesondere unter Bezugnahme auf so genannte Heißfilmluftmassenmesser beschrieben, wie sie beispielsweise aus Konrad Reif (Hrsg.): Sensoren im Kraftfahrzeug, 1. Auflage 2010, Seiten 146-148, bekannt sind. Derartige Heißfilmluftmassenmesser basieren in der Regel auf einem Sensorchip, insbesondere einem Siliziumsensorchip, beispielsweise mit einer Sensormembran als Messoberfläche oder Sensorbereich, welcher von dem strömenden fluiden Medium überströmbar ist. Der Sensorchip umfasst in der Regel mindestens ein Heizelement sowie mindestens zwei Temperaturfühler, welche beispielsweise auf der Messoberfläche des Sensorchips angeordnet sind, wobei der eine Temperaturfühler stromaufwärts des Heizelements und der andere Temperaturfühler stromabwärts des Heizelements gelagert ist. Aus einer Asymmetrie des von den Temperaturfühlern erfassten Temperaturprofils, welches durch die Strömung des fluiden Mediums beeinflusst wird, kann auf einen Massenstrom und/oder Volumenstrom des fluiden Mediums geschlossen werden.

Heißfilmluftmassenmesser sind üblicherweise als Steckfühler ausgestaltet, welcher fest oder austauschbar in ein Strömungsrohr einbringbar ist. Beispielsweise kann es sich bei diesem Strömungsrohr um einen Ansaugtrakt einer Brennkraftmaschine handeln.

Dabei durchströmt ein Teilstrom des Mediums wenigstens einen in dem Heißfilmluftmassenmesser vorgesehen Hauptkanal. Zwischen dem Einlass und dem Auslass des Hauptkanals ist ein Bypasskanal ausgebildet. Insbesondere ist der Bypasskanal derart ausgebildet, dass er einen gekrümmten Abschnitt zur Umlenkung des durch den Einlass des Hauptkanals eingetretenen Teilstroms des Mediums aufweist, wobei der gekrümmte Abschnitt im weiteren Verlauf in einen Abschnitt übergeht, in welchem ein Sensorchip angeordnet ist. Der zuletzt genannte Abschnitt stellt den eigentlichen Messkanal dar, in dem der Sensorchip angeordnet ist.

Bei herkömmlichen Heißfilmluftmassenmessern der beschriebenen Art ragt in der Regel ein Sensorträger mit dem darauf angebrachten oder eingebrachten Sensorchip in den Messkanal hinein. Beispielsweise kann der Sensorchip in den Sensorträger eingeklebt oder auf diesen aufgeklebt sein. Der Sensorträger kann beispielsweise mit einem Bodenblech aus Metall, auf welchem auch eine Elektronik, eine Ansteuer- und Auswerteschaltung (beispielsweise mit einem Schaltungsträger, insbesondere einer Leiterplatte) aufgeklebt sein kann, eine Einheit bilden. Beispielsweise kann der Sensorträger als angespritztes Kunststoffteil eines Elektronikmoduls ausgestaltet sein. Der Sensorchip und die Ansteuer- und Auswerteschaltung können beispielsweise durch Bondverbindungen miteinander verbunden werden. Das derart entstandene Elektronikmodul kann beispielsweise in ein Sensorgehäuse eingeklebt werden und der gesamte Steckfühler kann mit Deckeln verschlossen werden.

Derartige Heißfilmluftmassenmesser müssen in der Praxis einer Vielzahl von Anforderungen genügen. Neben dem Ziel, einen Druckabfall an dem Heißfilmluftmassenmesser insgesamt durch geeignete strömungstechnische Ausgestaltungen zu verringern, besteht eine der hauptsächlichen Herausforderungen darin, die Signalqualität sowie die Robustheit der Vorrichtungen gegenüber Kontamination durch Öl- und Wassertröpfchen sowie Ruß-, Staub- und sonstige Festkörperpartikel weiter zu verbessern. Diese Signalqualität bezieht sich beispielsweise auf einen Massenstrom des Mediums durch den zu dem Sensorchip führenden Messkanal sowie gegebenenfalls auf die Verminderung einer Signaldrift und die Verbesserung des Signal-zu-Rauschen-Verhältnisses. Die Signaldrift bezieht sich dabei auf die Abweichung beispielsweise des Massenstroms des Mediums im Sinne einer Veränderung der Kennlinienbeziehung zwischen dem tatsächlich auftretenden Massenstrom und dem im Rahmen der Kalibrierung bei der Fertigung ermittelten auszugebenden Signal. Bei der Ermittlung des Signal-zu-Rauschen-Verhältnisses werden die in schneller zeitlicher Folge ausgegebenen Sensorsignale betrachtet, wohingegen sich die Kennlinien- oder Signaldrift auf eine Veränderung des Mittelwertes bezieht.

Die DE 10 2013 212 162 A1 beschreibt eine Sensorvorrichtung zur Erfassung wenigstens einer Eigenschaft eines in einem Kanal strömenden fluiden Mediums. Die Sensorvorrichtung ist in einem von einem fluiden Medium durchströmbaren Kanalstück mit einem Einlass und einem Auslass eingebracht. Um eine Ablagerung von beladenen Partikeln auf dem Sensorelement des Sensors entgegenzuwirken ist vorgesehen, dass die gesamte Kanalstückwand des Kanalstücks vollständig aus einem elektrisch leitfähigen Kunststoff gebildet ist, wobei die Kanalstückwand auf festem elektrischen Potenzial liegt.

Trotz der zahlreichen Vorteile der aus dem Stand der Technik bekannten Sensoren und Verfahren zur Vermeidung der Verschmutzung des Sensorelements durch beispielsweise Staubpartikel beinhalten diese noch VerbesserungsPotenzial. So kann zukünftig jedoch durch eine Einengung der geforderten Lebensdauertoleranz, also schärfere Gesetzgebung einerseits und neue Applikationsfelder aufgrund der Erweiterung des Gültigkeitsgebiets bestehender Gesetze andererseits die Verwendung leitfähiger Kunststoffe und insbesondere deren elektrische Kontaktierung notwendig werden.

Aus der US 5,631,416 ist ein Sensor zur Bestimmung wenigstens eines Parameters eines durch einen Messkanal strömenden fluiden Mediums bekannt. bei dem der Sensor ein Sensorgehäuse in Form eines in ein Strömungsrohr eingebrachten oder einbringbaren Steckfühlers, in dem der Messkanal ausgebildet ist, und mindestens einen in dem Messkanal angeordneten Sensorchip zur Bestimmung des Parameters des fluiden Mediums aufweist, wobei das Sensorgehäuse einen Elektronikraum zur Aufnahme eines Elektronikmoduls und einen Elektronikraumdeckel zum Verschließen des Elektronikraums aufweist, wobei das Elektronikmodul in den Elektronikraum eingebracht ist und der Elektronikraumdeckel zumindest teilweise elektrisch leitfähige Eigenschaften aufweist. Das Elektronikmodul weist ein Bodenblech auf, wobei das Bodenblech mit dem Inneren des Elektronikraumdeckels elektrisch leitfähig verbunden ist.

### Offenbarung der Erfindung

Es wird daher ein Sensor zur Bestimmung wenigstens eines Parameters eines durch einen Messkanal strömenden fluiden Mediums vorgeschlagen, welcher die Nachteile bekannter Sensoren zumindest weitgehend vermeiden kann und der insbesondere eine Reduzierung bzw. eine Vermeidung einer Staubkontamination der mikromechanischen Sensormembran, des Sensorchips und des Sensorträgers und somit eine Reduzierung von Kennliniendriften, insbesondere über die Lebensdauer, insbesondere durch eine Ablagerung von Staubpartikeln an der Oberfläche der genannten Bauteile, ermöglicht, eine verbesserte elektromagnetische Verträglichkeit, also eine verringerte Empfindlichkeit der elektrischen und elektronischen Signalverarbeitung gegen eingestrahlte elektromagnetische Störungen, erlaubt und einen verbesserten Schutz gegen elektrostatische Entladungen in die Schaltung durch kontrollierte Ableitung der Ladung erlaubt.

Ein erfindungsgemäßer Sensor zur Bestimmung wenigstens eines Parameters eines durch einen Messkanal strömenden fluiden Mediums, insbesondere eines Ansaugluftmassenstroms einer Brennkraftmaschine, weist ein Sensorgehäuse, insbesondere einen in ein Strömungsrohr eingebrachten oder einbringbaren Steckfühler, in dem der Messkanal ausgebildet ist, und mindestens einen in dem Messkanal angeordneten Sensorchip zur Bestimmung des Parameters des fluiden Mediums auf, wobei das Sensorgehäuse einen Elektronikraum zur Aufnahme eines Elektronikmoduls und einen Elektronikraumdeckel zum Verschließen des Elektronikraums aufweist. Dabei weist der Elektronikraumdeckel zumindest teilweise elektrisch leitfähige Eigenschaften auf, wobei das Elektronikmodul mit einem Inneren des Elektronikraumdeckels elektrisch leitfähig verbunden ist.

Erfindungsgemäß ist das Bodenblech mit dem Inneren des Elektronikraumdeckels kombiniert mit einem zumindest teilweisen Materialabtrag einer Oberfläche des Elektronikraumdeckels verbunden, indem entweder
- der Elektronikraumdeckel einen mit einem Loch versehenen Vorsprung und das Bodenblech einen Kontaktpin aufweist, wobei der Durchmesser des Kontaktpins größer als der Durchmesser des Lochs ist und der Kontaktpin eine Spritzhaut oder Oberfläche des Elektronikraumdeckels anritzt, oder
- der Elektronikraumdeckel einen Vorsprung und das Bodenblech eine scharfkantige Nut aufweist, wobei eine Breite der Nut kleiner oder gleich groß wie eine Breite des Vorsprungs ist und der Vorsprung in die Nut mittels einer Pressverbindung kontaktiert ist und die scharfkantige Nut den Vorsprung außen anritzt, oder
- der Elektronikraumdeckel einen Vorsprung und das Bodenblech eine scharfkantige Stanzkante aufweist, wobei die scharfkantige Stanzkante eine Seitenfläche des Vorsprungs anritzt.

Unter einer elektrisch leitfähigen Verbindung des Elektronikmoduls mit einem Inneren des Elektronikraumdeckels ist im Rahmen der vorliegenden Erfindung zu verstehen, dass das Elektronikmodul mit mindestens einem Bereich des Elektronikraumdeckels elektrisch leitfähig verbunden ist, der sich im Inneren des Elektronikraumdeckels befindet. Das Innere des Elektronikraumdeckels ist das von den Außenflächen des Elektronikraumdeckels umschlossene Volumen. Wird der Elektronikraumdeckel beispielsweise wie üblich aus Kunststoff mittels eines Spritzgußverfahrens hergestellt, so bildet sich im Rahmen des Spritzgußverfahrens an der Außenfläche des Elektronikraumdeckels eine sogenannte Spritzhaut unterhalb derer der Kunststoff bis zum Erkalten zunächst weich ist. Eine elektrisch leitfähige Verbindung mit dem Inneren des Elektronikraumdeckels kann nun durch Anritzen oder Abschälen der Spritzhaut erfolgen. So kann die elektrisch leitfähige Verbindung mit dem Inneren des Elektronikraumdeckels dadurch realisiert werden, dass beim Montieren des Elektronikraumdeckels an dem Sensorgehäuse die Spritzhaut bewusst angeritzt oder abgeschält wird. Das Abschälen kann auch ein integraler Bestandteil des Spritzgussprozesses sein.

Das Elektronikmodul kann ein Bodenblech aufweisen. Das Bodenblech kann mit dem Inneren des Elektronikraumdeckels elektrisch leitfähig verbunden sein. Beispielsweise wird beim Montieren des Elektronikraumdeckels an dem Sensorgehäuse die Oberfläche bzw. Spritzhaut des Elektronikraumdeckels bewusst mittels einer Stanzkante des Bodenblechs angeritzt oder abgeschält. Das Bodenblech kann auf ein festes Potenzial gesetzt sein. Das Bodenblech kann mit dem festen Potenzial mittels eines elektrisch leitfähigen Klebstoffs oder mittels Drahtbonding verbunden sein. Vorzugsweise wird das elektrische Potenzial von spannungstragenden Elementen des Elektronikmoduls bereitgestellt. Beispielsweise ist das feste Potenzial die Sensormasse.

Das Bodenblech ist mit dem Inneren des Elektronikraumdeckels kombiniert mit einem zumindest teilweisen Materialabtrag einer Oberfläche des Elektronikraumdeckels verbunden. Unter einem Materialabtrag einer Oberfläche des Elektronikraumdeckels ist im Rahmen der vorliegenden Erfindung eine oberflächliche Entfernung von Material des Elektronikraumdeckels zu verstehen. Beispielsweise durch Anritzen oder Abschälen beim Montieren des Elektronikraumdeckels an dem Sensorgehäuse die Oberfläche bewusst angeritzt oder abgeschält werden. Oberflächlich in diesem Zusammenhang ist als eine Materialdicke von nicht mehr als 1 mm zu verstehen.

Das Elektronikmodul kann einen Kontaktpin aufweisen, der mit dem Inneren des Elektronikraumdeckels elektrisch leitfähig verbunden ist. Der Elektronikraumdeckel kann einen Vorsprung aufweisen. Das Elektronikmodul kann mit einem Inneren des Vorsprungs elektrisch leitfähig verbunden sein. Der Elektronikraumdeckel kann ein aus einem elektrisch leitfähigen Material hergestelltes Einlegebauteil in seinem Inneren aufweisen. Das Einlegebauteil kann mit dem Elektronikmodul elektrisch leitfähig verbunden sein. Das Einlegebauteil kann aus Metall hergestellt sein. Das Einlegebauteil kann mit dem Elektronikmodul mittels eines elastischen Kontakts elektrisch leitfähig verbunden sein.

Unter einem Einlegebauteil ist im Rahmen der vorliegenden Erfindung ein Bauteil zu verstehen, das bei der Herstellung des Elektronikraumdeckels von dem Material des Elektronikraumdeckels vollständig umgeben wird. Beispielsweise wird das Einlegebauteil in eine Gussform eingelegt und dann mit dem Material des Elektronikraumdeckels umgossen. Dies kann insbesondere im Rahmen eines Spritzgussverfahrens mit Kunststoff realisiert werden.

Unter der Hauptströmungsrichtung ist im Rahmen der vorliegenden Erfindung die lokale Strömungsrichtung des fluiden Mediums am Ort des Sensors bzw. der Sensoranordnung zu verstehen, wobei beispielsweise lokale Unregelmäßigkeiten, wie zum Beispiel Turbulenzen, unberücksichtigt bleiben können. Insbesondere kann unter der Hauptströmungsrichtung somit die lokale gemittelte Transportrichtung des strömenden fluiden Mediums verstanden werden. Die Hauptströmungsrichtung kann daher einerseits auf die Strömungsrichtung am Ort der Sensoranordnung selbst bezogen sein oder auch auf die Strömungsrichtung in dem Kanal innerhalb des Sensorgehäuses, wie beispielsweise am Ort des Sensorträgers oder des Sensorchips, wobei sich beide genannten Hauptströmungsrichtungen unterscheiden können. Im Rahmen der vorliegenden Erfindung wird deshalb stets angegeben, auf welchen Ort sich die Hauptströmungsrichtung bezieht. Sofern keine nähere Angabe gemacht ist, bezieht sich die Hauptströmungsrichtung auf den Ort der Sensoranordnung.

Im Rahmen der vorliegenden Erfindung kann der Sensorträger ganz oder teilweise als Schaltungsträger, insbesondere als Leiterplatte, ausgestaltet sein oder Teil eines Schaltungsträgers, insbesondere einer Leiterplatte, sein. Beispielsweise kann der Schaltungsträger, insbesondere die Leiterplatte, einen Fortsatz aufweisen, welcher den Sensorträger bildet und welcher in den Kanal, beispielsweise den Messkanal eines Heißfilmluftmassenmessers, hineinragt. Der übrige Teil des Schaltungsträgers, insbesondere der Leiterplatte, kann beispielsweise in einem Elektronikraum, in einem Gehäuse der Sensoranordnung oder eines Steckfühlers der Sensoranordnung untergebracht sein.

Unter einer Leiterplatte ist dabei im Rahmen der vorliegenden Erfindung allgemein ein im Wesentlichen plattenförmiges Element zu verstehen, welches auch als Träger elektronischer Strukturen, wie beispielsweise Leiterbahnen, Anschlusskontakte oder Ähnliches, genutzt werden kann und vorzugsweise auch eine oder mehrere derartiger Strukturen aufweist. Grundsätzlich kommen dabei auch zumindest leichte Abweichungen von der Plattenform in Betracht und sollen begrifflich mit erfasst sein. Die Leiterplatte kann beispielsweise aus einem Kunststoffmaterial und/oder einem Keramikmaterial hergestellt sein, beispielsweise einem Epoxidharz, insbesondere einem faserverstärkten Epoxidharz. Insbesondere kann die Leiterplatte beispielsweise als Leiterplatte mit Leiterbahnen, insbesondere aufgedruckten Leiterbahnen (printed circuit board, PCB), ausgestaltet sein.

Auf diese Weise lässt sich das Elektronikmodul der Sensoranordnung stark vereinfachen und es lässt sich beispielsweise auf ein Bodenblech und einen separaten Sensorträger verzichten. Bodenblech und Sensorträger können durch eine einzige Leiterplatte ersetzt werden, auf welcher beispielsweise auch eine Ansteuer- und Auswerteschaltung der Sensoranordnung ganz oder teilweise angeordnet sein kann. Diese Ansteuer- und Auswerteschaltung der Sensoranordnung dient der Ansteuerung des mindestens einen Sensorchips und/oder der Auswertung der von diesem Sensorchip generierten Signale. Auf diese Weise lässt sich durch Zusammenfassung der genannten Elemente der Herstellaufwand der Sensoranordnung erheblich vermindern und der Bauraumbedarf für das Elektronikmodul stark verringern.

Die Sensoranordnung kann insbesondere mindestens ein Gehäuse aufweisen, wobei der Kanal in dem Gehäuse bzw. im Gehäusedeckel ausgebildet ist. Beispielsweise kann der Kanal einen Hauptkanal und einen Bypasskanal bzw. Messkanal umfassen, wobei der Sensorträger und der Sensorchip beispielsweise in dem Bypass- bzw. Messkanal angeordnet sein können. Weiterhin kann das Gehäuse einen von dem Bypasskanal getrennten Elektronikraum aufweisen, wobei das Elektronikmodul oder die Leiterplatte im Wesentlichen in dem Elektronikraum aufgenommen ist. Der Sensorträger kann dann als ein in den Kanal hineinragender Fortsatz der Leiterplatte ausgebildet sein. Diese Anordnung ist technisch vergleichsweise einfach zu realisieren, im Gegensatz zu den aufwändigen Elektronikmodulen, welche aus dem Stand der Technik bekannt sind.

Insbesondere in dem Fall, in welchem eine Leiterplatte als Sensorträger verwendet wird, jedoch auch in anderen Fällen und/oder unter Verwendung anderer Medien als Sensorträger, kann der Sensorträger zumindest teilweise als mehrschichtiger Sensorträger ausgestaltet sein. So kann der Sensorträger in einer so genannten Multilayer-Technik ausgestaltet sein und zwei oder mehrere miteinander verbundene Trägerschichten aufweisen. Beispielsweise können diese Trägerschichten wiederum aus einem Metall, einem Kunststoff oder einem Keramikmaterial oder einem Verbundmaterial hergestellt sein und durch Verbindungstechniken, wie z. B. Kleben, miteinander verbunden sein.

In diesem Fall, in welchem eine Multilayer-Technik verwendet wird mit mehreren Sensorschichten des Sensorträgers, kann die Anströmkante durch eine unterschiedliche Dimensionierung der Trägerschichten entgegen der Hauptströmungsrichtung des fluiden Mediums zumindest teilweise gestuft ausgeführt sein. Auf diese Weise lassen sich die Profile zumindest gestuft angenähert realisieren. Beispielsweise lassen sich auf diese Weise rechteckig geformte oder - angenähert durch eine Stufenform - zumindest näherungsweise rund-, abgerundete oder keilförmig geformte Profile in einer Schnittebene senkrecht zur Erstreckungsebene des Sensorträgers ausbilden. Der Sensorchip kann auf bzw. in dem Sensorträger derart angeordnet sein, dass dieser senkrecht zur lokalen Hauptströmungsrichtung ausgerichtet ist. Beispielsweise kann der Sensorchip rechteckig ausgestaltet sein, wobei eine Seite dieses Rechtecks senkrecht oder im Wesentlichen senkrecht, beispielsweise mit einer Ausrichtung, welche um nicht mehr als 10 Grad von der Senkrechten abweicht, zur lokalen Hauptströmungsrichtung angeordnet ist.

Der Sensorchip kann über mindestens eine elektrische Verbindung elektrisch kontaktiert werden. Beispielsweise kann der Sensorträger, insbesondere eine den Sensorträger bildende Leiterplatte oder ein Fortsatz dieser Leiterplatte, einen oder mehrere Leiterbahnen und/oder Kontaktpads aufweisen, welche mit entsprechenden Kontakten auf dem Sensorchip beispielsweise durch ein Bondingverfahren verbunden sind. In diesem Fall kann die elektrische Verbindung durch mindestens eine Abdeckung geschützt und von dem fluiden Medium getrennt werden. Diese Abdeckung kann insbesondere als so genannter Glob-Top ausgestaltet sein, beispielsweise als Kunststofftropfen und/oder Klebstofftropfen, welcher die elektrische Verbindung, beispielsweise die Bonddrähte abdeckt. Auf diese Weise lassen sich insbesondere auch Beeinflussungen der Strömung durch die elektrische Verbindung vermindern, da der Glob-Topp eine glatte Oberfläche aufweist.

Ferner kann der Sensorchip mindestens einen Sensorbereich aufweisen. Dieser Sensorbereich kann beispielsweise eine Sensoroberfläche aus beispielsweise einem porösen, keramischen Material und/oder insbesondere eine Sensormembran sein. Die Sensormembran als Messoberfläche oder Sensorbereich kann von dem strömenden fluiden Medium überströmbar sein. Der Sensorchip umfasst beispielsweise mindestens ein Heizelement sowie mindestens zwei Temperaturfühler, welche beispielsweise auf der Messoberfläche des Sensorchips angeordnet sind, wobei ein Temperaturfühler stromaufwärts des Heizelements und der andere Temperaturfühler stromabwärts des Heizelements gelagert ist. Aus einer Asymmetrie des von den Temperaturfühlern erfassten Temperaturprofils, welches durch die Strömung des fluiden Mediums beeinflusst wird, kann auf einen Massenstrom und/oder Volumenstrom des fluiden Mediums geschlossen werden.

Unter einem Anströmabschnitt des Sensorträgers ist im Rahmen der vorliegenden Erfindung derjenige Abschnitt des Sensorträgers zu verstehen, der sich stromaufwärts des Sensorchips befindet.

Ein Grundgedanke der vorliegenden Erfindung ist, eine zuverlässige elektrische Kontaktierung eines Elektronikmoduls mit einem Deckel, beispielsweise einem Elektronikraumdeckel, der elektrisch leitfähige Eigenschaften aufweist, zu schaffen. Dadurch können Sensoren gefertigt werden, die gegenüber Verschmutzung deutlich robuster sind als bisher bekannte Sensoren und gleichzeitig aber die strengen Kostenvorgaben einer Großserienproduktion erfüllen.

In einer Ausführungsform der Erfindung wird der zu kontaktierende Elektronikraumdeckel aus elektrisch leitfähigem Kunststoff hergestellt und bereits beim Spritzgussverfahren mittels eines Stützstifts mit einem Loch versehen. Während des Fügeprozesses schneidet nun ein herausragender bzw. vorstehender Kontaktpin, der aus einem elektrisch leitfähigen Material hergestellt ist, wie beispielsweise Metall, und mit dem Elektronikmodul elektrisch leitfähig verbunden ist, in das vorbereitete Loch des Elektronikraumdeckels. Die Durchmesser sind dabei so bemessen, dass der Durchmesser des Pins größer oder gleich groß ist wie der Durchmesser des Lochs. Damit ist gewährleistet, dass der metallische Kontaktpin die Spritzhaut des Kunststoffteils anritzt und somit einen Kontakt mit möglichst geringem elektrischem Übergangswiderstand bewerkstelligt.

In einer weiteren Ausführungsform der Erfindung ist der Elektronikraumdeckel im Bereich der zuvor beschriebenen Schneidverbindung aufgedickt, um einerseits eine größere Kontaktfläche (Mantelfläche) zu erzielen und anderseits einen fluchtenden Abschluss des Kontaktpins mit dem montierten Elektronikraumdeckel zu gewährleisten. Gegebenenfalls wird durch einen anschließenden lokalen Aufheizprozess oder Klebeprozess eine hermetische Dichtheit bewirkt. Je nach Ausgestaltung des Loches ist dies jedoch gar nicht erforderlich, wenn nämlich das Loch als Kegel ausgeführt ist und somit nach außen, d.h. von dem Elektronikraum weg, verschlossen ist. Oftmals ist eine Dichtheit aber auch gar nicht gefordert, bzw. explizit nicht gewollt, um ein Entweichen der eingeschlossenen Luft während des Fügevorgangs zu ermöglichen. Üblicherweise weist ein Heißfilmluftmassenmesser ein solches Entlüftungsloch auf, welches bei Implementierung dieser Erfindung entfallen könnte, was zu einer höheren Dichtheit des gesamten Elektronikraumes führt und zwar mit und ohne den oben erwähnten zusätzlichen Dichtprozess.

In einer weiteren vorteilhaften Ausführungsform der Erfindung wird ein elektrischer Kontakt außerhalb des Sensorgehäuses hergestellt, um damit weitere Komponenten auf ein definiertes Potenzial bringen zu können, beispielsweise Zylindergehäuse oder andere umschließende Gebilde. Dieser Kontakt kann entweder zwischen Kunststofffügeteil und Leiterkamm direkt ausgebildet sein, wobei ein Teil des Leiterkamms entsprechend ausgeformt und gebogen wird, oder wie bei einem herkömmlichen Heißfilmluftmassenmesser zwischen Kunststofffügeteil und metallischem Bodenblech. Aus Symmetrie und Lastverteilungsgründen können auch mehrere Schneidkontakte dargestellt werden.

Im Rahmen der vorliegenden Erfindung können insbesondere zwei Kontaktstellen vorgesehen werden: Fügeteil in Form des Elektronikraumdeckels aus leitfähigem Kunststoff zu Metalleinpressteil und Metalleinpressteil zu Masse-Pin des Leiterkamms. Das zu kontaktierende Fügeteil aus leitfähigem Kunststoff weist beispielsweise eine Nase auf, die mit einer Quetschverbindung auf das Metallteil kontaktiert wird. Es sind ein oder mehrere, beispielsweise vier derartige Kontakte vorgesehen. Eine weitere Kontaktstelle bewerkstelligt die Durchkontaktierung zum Steckerpin.

In einer weiteren Ausführungsform der Erfindung weist das Fügeteil im Bereich der Kontaktstelle eine Nase auf, die mit einer Quetschverbindung auf das Metallteil kontaktiert wird. Um einen definierten, möglichst niederohmigen elektrischen Widerstand zu erzielen, ist es vorteilhaft, die Spritzhaut des Kunststoffteils anzuritzen. Dies kann dadurch erzielt werden, dass die scharfe Stanzkante des Metallblechs die Kunststoffoberfläche während des Fügevorgangs lokal abschält. Es ist aber auch vorstellbar, dass ein Abschälvorgang an einer definierten Stelle integraler Bestandteil des Kunststoffspritzprozesses sein kann. Zusätzlich kann ein Metall-Inlay im Elektronikraumdeckel vorgesehen werden. Diese Metalleinlage im Elektronikraumdeckel bildet einerseits den Kontakt zum Kunststoffdeckel aus elektrisch leitfähigem Material und kann andererseits einen federnden Metall-Metall-Kontakt zur verbauten Leiterplatte herstellen. Dieser federnde Kontakt kann vertikal, vorzugsweise jedoch horizontal eingebaut werden.

Die Durchkontaktierung zum Steckerpin kann durch eine Klebeverbindung oder eine Dickdraht-Bondverbindung zu einem Masse-Kontakt der Leiterplatte hergestellt werden. Die Konstruktion ist so gestaltet, dass die zur Montage erforderlichen Einpresskräfte sinnvoll verteilt werden und sie über den bestimmungsgemäßen Temperaturbereich mit tolerierbaren Verzugskräften arbeitet. Gegebenenfalls könnte durch einen anschließenden lokalen Aufheizprozess der Kontakt abschließend verbessert werden.

### Kurze Beschreibung der Zeichnungen

Weitere optionale Einzelheiten und Merkmale der Erfindung ergeben sich aus der nachfolgenden Beschreibung bevorzugter Ausführungsbeispiele, welche in den Figuren schematisch dargestellt sind.

Es zeigen:
- Figur 1: eine perspektivische Ansicht eines Sensors,
- Figur 2: eine vergrößerte Ansicht eines Elektronikmoduls des Sensors,
- Figur 3: eine Querschnittsansicht eines Sensors gemäß einer ersten Ausführungsform der vorliegenden Erfindung,
- Figur 4: eine Querschnittsansicht eines Sensors gemäß einer zweiten Ausführungsform der vorliegenden Erfindung,
- Figur 5: eine Querschnittsansicht eines Sensors gemäß einer dritten Ausführungsform der vorliegenden Erfindung,
- Figur 6: eine Querschnittsansicht eines Sensors gemäß einer vierten Ausführungsform der vorliegenden Erfindung,
- Figur 7: eine Seitenansicht eines Elektronikmoduls des Sensors,
- Figur 8: eine Seitenansicht des Elektronikmoduls des Senors,
- Figur 9: eine Querschnittsansicht eines Sensors gemäß einer fünften Ausführungsform und
- Figur 10: eine Querschnittsansicht eines Sensors gemäß einer sechsten Ausführungsform.

### Ausführungsformen der Erfindung

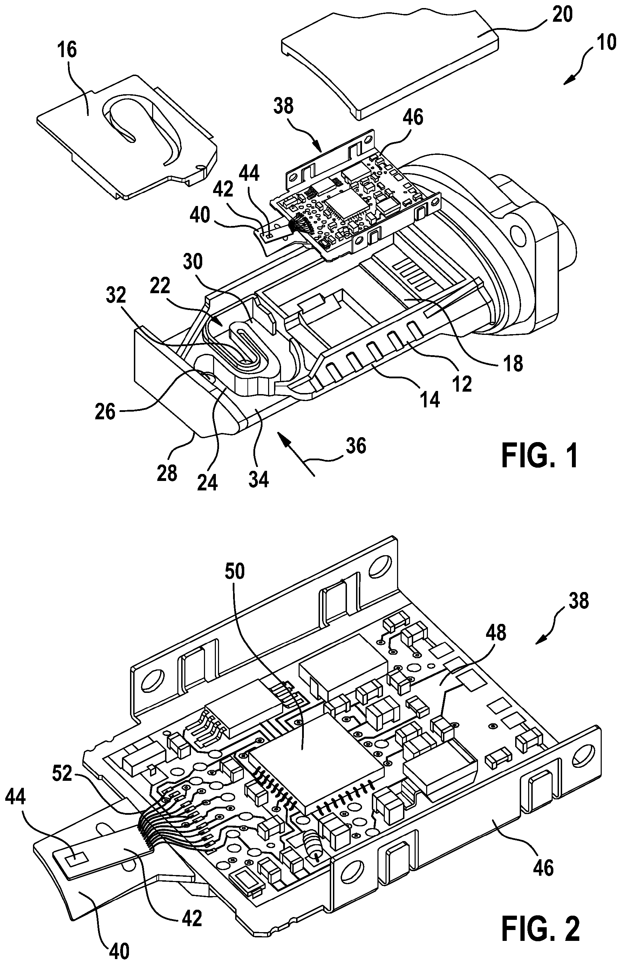

Figur 1 zeigt eine perspektivische Ansicht eines Sensors 10 zur Bestimmung eines Parameters eines fluiden Mediums. Der Sensor 10 ist als Heißfilmluftmassenmesser ausgestaltet und umfasst ein als Steckfühler ausgebildetes Sensorgehäuse 12, welches beispielsweise in ein Strömungsrohr, insbesondere einen Ansaugtrakt einer Brennkraftmaschine, eingesteckt werden kann. Das Sensorgehäuse 12 weist einen Gehäusekörper 14, einen Messkanaldeckel 16, einen Elektronikraum 18 sowie einen Elektronikraumdeckel 20 zum Verschließen des Elektronikraums 18 auf. In dem Gehäusekörper 16 ist eine Kanalstruktur 22 ausgebildet. Die Kanalstruktur 22 weist einen Hauptkanal 24 auf, welcher in einem Hauptstromauslass 26 beispielsweise auf der Unterseite 28 bezogen auf die Darstellung in Figur 1 des Sensorgehäuses 12 mündet, sowie einen von dem Hauptkanal 24 abzweigenden Bypass- bzw. Messkanal 30, welcher in einen Bypass- oder Messkanalauslass 32 mündet, der separat oder aber integriert ausgeführt sein kann. Durch die Kanalstruktur 22 kann über eine Einlassöffnung 34, die im eingesetzten Zustand einer Hauptströmungsrichtung 36 des fluiden Mediums am Ort des Sensorgehäuses 12 entgegenweist, eine repräsentative Menge des fluiden Mediums strömen.

Figur 2 zeigt eine vergrößerte Darstellung eines Elektronikmoduls 38 des Sensors 10. In einem eingesetzten Zustand des Elektronikmoduls 38 ragt ein Sensorträger 40 in den Messkanal 30. In diesen Sensorträger 40 ist ein Sensorchip 42 derart eingelassen, dass eine als Sensorbereich des Sensorchips 42 ausgebildete mikromechanische Sensormembran 44 von dem fluiden Medium überströmbar ist. Der Sensorträger 40 ist mit dem Sensorchip 42 Bestandteil des Elektronikmoduls 38. Das Elektronikmodul 38 weist weiter ein gebogenes Bodenblech 46 sowie eine darauf angebrachte, beispielsweise aufgeklebte Leiterplatte 48 mit einer Ansteuer- und Auswerteschaltung 50 auf. Der Sensorchip 42 ist mit der Ansteuer- und Auswerteschaltung 50 über elektrische Verbindungen 52, welche hier als Drahtbonding ausgestaltet sind, elektrisch verbunden. Das derart entstandene Elektronikmodul 38 wird in den Elektronikraum 18 des Gehäusekörpers 14 - seinerseits fester Bestandteil des Sensorgehäuses 12 - eingebracht, beispielsweise eingeklebt. Dabei ragt der Sensorträger 40 in die Kanalstruktur 22 hinein. Anschließend wird der Elektronikraum 18 von dem Elektronikraumdeckel 20 verschlossen.

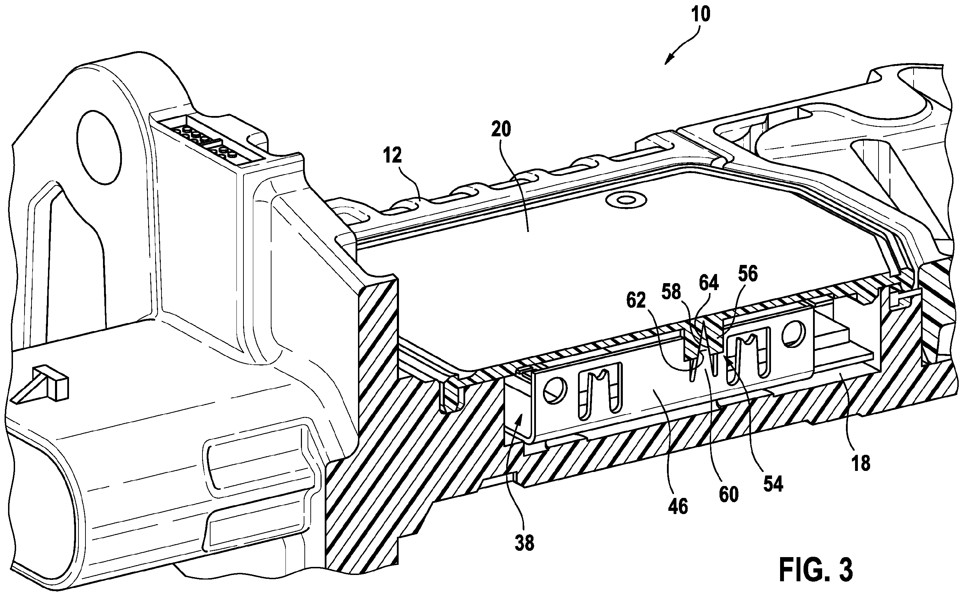

Figur 3 zeigt eine Querschnittsansicht eines Sensors 10 gemäß einer ersten Ausführungsform der vorliegenden Erfindung. Der Elektronikraumdeckel 20 weist zumindest teilweise elektrisch leitfähige Eigenschaften auf. Beispielsweise ist der Elektronikraumdeckel 20 aus einem elektrisch leitfähigen Material hergestellt, wie beispielsweise elektrisch leitfähigem Kunststoff. Das Elektronikmodul 38 ist mit einem Inneren 54 des Elektronikraumdeckels 20 verbunden, wie nachstehend ausführlicher beschrieben wird. So ist das Bodenblech 46 mit dem Inneren 54 des Elektronikraumdeckels 20 elektrisch leitfähig verbunden. Dies kann beispielsweise dadurch realisiert sein, dass der Elektronikraumdeckel 20 einen Vorsprung 56 aufweist. Der Vorsprung 56 ist mit einem Loch 58 versehen. Das Loch 58 ist kegelförmig ausgebildet und verjüngt sich in Richtung zu dem Elektronikraumdeckel 20. Die Ausbildung des Elektronikraumdeckels 20 mit dem Vorsprung 56 und dem Loch 58 kann beispielsweise dadurch realisiert sein, dass der Elektronikraumdeckel 20 aus Kunststoff hergestellt wird und das Loch 58 dadurch gebildet wird, dass ein Stützstift in die Spritzgussform eingebracht wird, um den herum der Kunststoff gespritzt wird.

Das Bodenblech 46 weist einen Kontaktpin 60 auf, der von diesem hervorsteht. Der Kontaktpin 60 ist an einer Stelle des Bodenblechs 46 angeordnet, die vorgesehen ist, dem Vorsprung 56 gegenüberzuliegen. Wie in Figur 3 gezeigt, ist der Kontaktpin 60 ebenfalls kegelförmig, bzw. als Flachkegel, nämlich als Bestandteil eines metallischen Stanzteils, ausgebildet und verjüngt sich in einer Richtung von dem Bodenblech weg. Ein Durchmesser des Kontaktpins 60 ist dabei größer als oder gleich groß wie ein Durchmesser des Lochs 58. Während des Fügeprozesses, d. h. beim Montieren des Elektronikraumdeckels 20 an dem Sensorgehäuse 12, schneidet nun der Kontaktpin 60 in das Loch 58 des Elektronikraumdeckels 20. Da der Durchmesser des Kontaktpins 60 größer als der Durchmesser des Lochs 58 ist, ritzt der Kontaktpin 60 eine Spritzhaut bzw. Oberfläche 62 des Elektronikraumdeckels 20 an. Entsprechend ist das Bodenblech 46 mit dem Inneren 54 des Elektronikraumdeckels 20 kombiniert mit einem zumindest teilweisen Materialabtrag der Oberfläche 62 des Elektronikraumdeckels 20 verbunden. Genauer ist das Elektronikmodul 46 mittels des Kontaktpins 60 mit einem Inneren 64 des Vorsprungs 56 elektrisch leitfähig verbunden. Dadurch wird ein Kontakt mit einem möglichst geringen Übergangswiderstand bewerkstelligt und das Bodenblech 46 ist sicher mit dem Inneren 54 des Elektronikraumdeckels 20 elektrisch leitfähig verbunden. Der Kontaktpin 60 ist kürzer als der Vorsprung 56. Deshalb durchdringt der Kontaktpin den Elektronikraumdeckel 20 nicht. Alternativ können der Kontaktpin 60 und das Loch 58 zylindrisch ausgebildet sein.

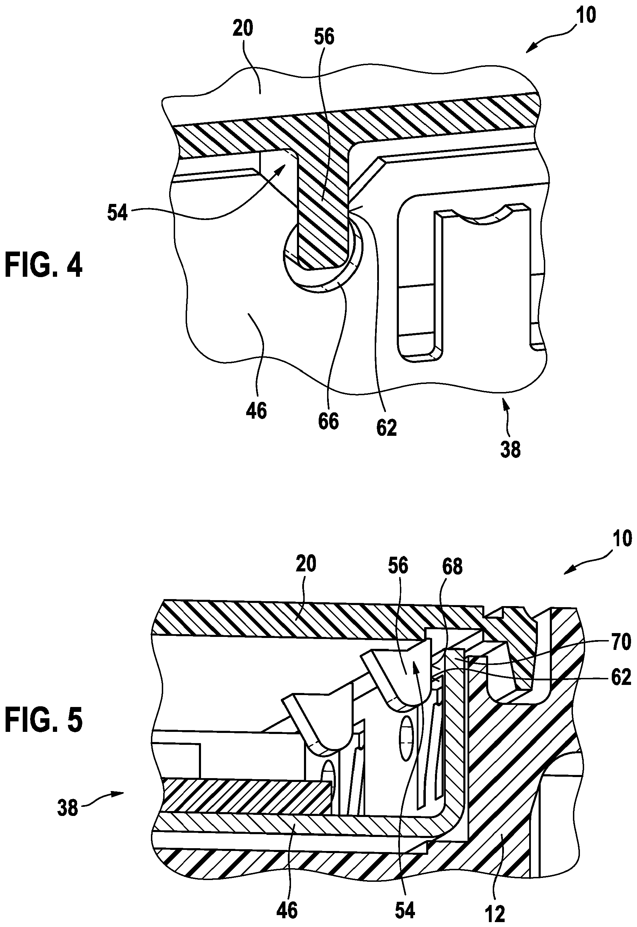

Figur 4 zeigt eine Querschnittsansicht eines Sensors 10 gemäß einer zweiten Ausführungsform der vorliegenden Erfindung. Nachstehend werden lediglich die Unterschiede zu der ersten Ausführungsform beschrieben und gleiche Bauteile sind mit gleichen Bezugszeichen versehen. Wie bei der ersten Ausführungsform weist der Elektronikraumdeckel 20 einen Vorsprung 56 auf. Der Vorsprung 56 ist nasenförmig ausgebildet und weist im Gegensatz zur ersten Ausführungsform kein Loch 58 auf. Das Bodenblech 46 weist eine Nut 66 auf. Eine Breite der Nut 66 ist dabei kleiner als oder gleich groß wie eine Breite des Vorsprungs 56. Mit anderen Worten ist die Nut 66 gleich breit oder schmaler als der Vorsprung 56. Beim Montieren des Elektronikraumdeckels 20 an dem Sensorgehäuse 12 wird nun der Vorsprung 56 in die Nut 66 mittels einer Press- bzw. Quetschverbindung auf das Bodenblech 46 kontaktiert. Da der Rand der Nut 66 vergleichsweise scharfkantig ist, ritzt das Bodenblech 46 den Vorsprung 56 außen an. Dabei kommt es zu einem teilweisen Materialabtrag der Oberfläche 62 des Elektronikraumdeckels 20 im Bereich des Vorsprungs 56. Dadurch wird ein Kontakt mit einem möglichst geringen Übergangswiderstand bewerkstelligt und das Bodenblech 46 ist sicher mit dem Inneren 54 des Elektronikraumdeckels 20 elektrisch leitfähig verbunden.

Figur 5 zeigt eine Querschnittsansicht eines Sensors 10 gemäß einer dritten Ausführungsform der vorliegenden Erfindung. Nachstehend werden lediglich die Unterschiede zu der ersten Ausführungsform beschrieben und gleiche Bauteile sind mit gleichen Bezugszeichen versehen. Bei dem Sensor 10 der dritten Ausführungsform ist der Vorsprung 56 des Elektronikraumdeckels 20 breiter ausgebildet als bei der zweiten Ausführungsform und weist eine Seitenfläche 68 auf, die in einem montierten Zustand einer scharfkantigen Stanzkante 70 des Bodenblechs 46 zugewandt ist bzw. gegenüberliegt. Beim Montieren des Elektronikraumdeckels 20 auf dem Sensorgehäuse 12 kommt es zu einem teilweisen Materialabtrag der Oberfläche 62 des Elektronikraumdeckels 20, da die scharfkantige Stanzkante 70 des Bodenblechs 46 die Seitenfläche 68 anritzt. Dadurch wird ein Kontakt mit einem möglichst geringen Übergangswiderstand bewerkstelligt und das Bodenblech 46 ist sicher mit dem Inneren 54 des Elektronikraumdeckels 20 elektrisch leitfähig verbunden.

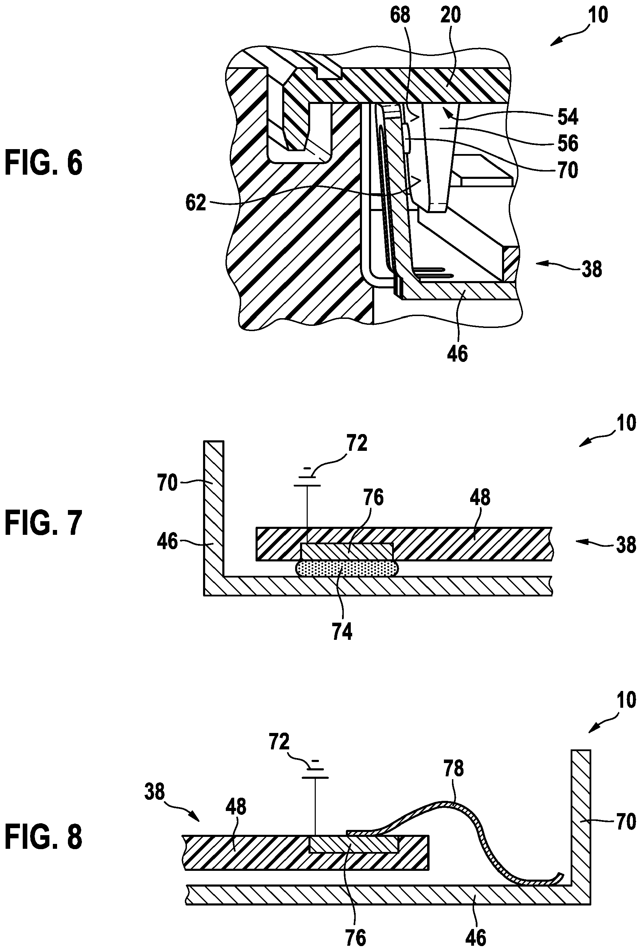

Figur 6 zeigt eine Querschnittsansicht eines Sensors 10 gemäß einer vierten Ausführungsform der vorliegenden Erfindung. Nachstehend werden lediglich die Unterschiede zu der ersten Ausführungsform beschrieben und gleiche Bauteile sind mit gleichen Bezugszeichen versehen. Bei dem Sensor 10 der vierten Ausführungsform ist der Vorsprung 56 länger ausgebildet als der Vorsprung 56 der dritten Ausführungsform. Der Vorsprung 56 ist so angeordnet, dass es beim Montieren es zu einer federelastischen Verbindung des Elektronikraumdeckels 20 mit der Stanzkante 70 des Bodenblechs 46 kommt. Dabei wird die Stanzkante 70 von dem Vorsprung 56 etwas nach außen gedrückt. Beim Montieren des Elektronikraumdeckels 20 auf dem Sensorgehäuse 12 kommt es zu einem teilweisen Materialabtrag der Oberfläche 62 des Elektronikraumdeckels 20, da die scharfkantige Stanzkante 70 des Bodenblechs 46 die Seitenfläche 68 anritzt, ggf. ist die Oberfläche der elastischen Federverbindung des Bodenblechs 46 lokal so auszugestalten, dass aufgrund einer lokal erhöhten Oberflächenrauigkeit ein Materialabtrag am Deckel 62 stattfinden kann. Dadurch wird ein Kontakt mit einem möglichst geringen Übergangswiderstand bewerkstelligt und das Bodenblech 46 ist sicher mit dem Inneren 54 des Elektronikraumdeckels 20 elektrisch leitfähig verbunden.

Figur 7 zeigt eine Seitenansicht des Elektronikmoduls 38, wie es bei einer der zuvor beschriebenen Ausführungsformen verwendet werden kann. Das Bodenblech 46 ist auf ein festes Potenzial 72 gesetzt. Beispielsweise ist das Bodenblech 46 mit dem festen Potenzial 72 mittels eines elektrisch leitfähigen Klebstoffs 74 verbunden. Das feste elektrische Potenzial 72 kann beispielsweise ein Massekontakt 76 der Leiterplatte 48 sein.

Figur 8 zeigt eine Seitenansicht des Elektronikmoduls 38, wie es bei einer der zuvor beschriebenen Ausführungsformen verwendet werden kann. Auch hier ist das Bodenblech 46 mit dem festen Potenzial 72 verbunden. Dabei erfolgt die Verbindung des Bodenblechs 46 mit dem festen Potenzial 72 mittels Drahtbonding 78.

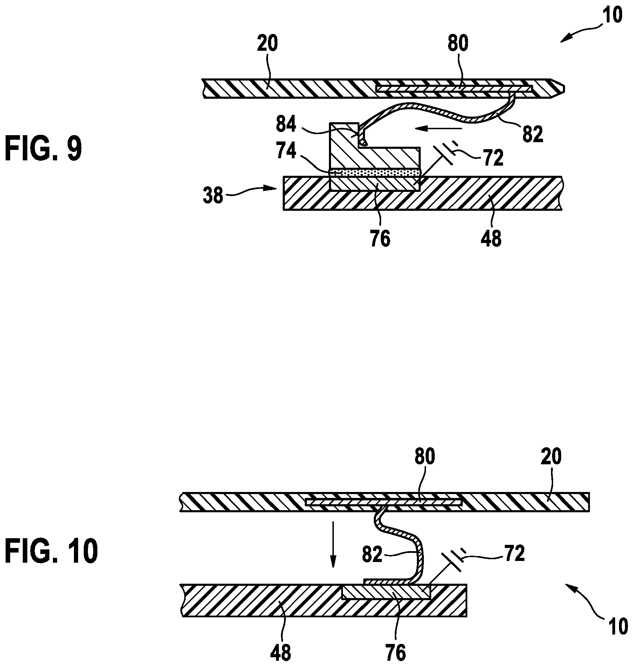

Figur 9 zeigt eine Querschnittsansicht eines Sensors 10 gemäß einer fünften Ausführungsform der vorliegenden Erfindung. Nachstehend werden lediglich die Unterschiede zu der ersten Ausführungsform beschrieben und gleiche Bauteile sind mit gleichen Bezugszeichen versehen. Bei dem Sensor 10 der fünften Ausführungsform weist der Elektronikraumdeckel 20 ein aus einem elektrisch leitfähigen Material hergestelltes Einlegebauteil 80 in seinem Inneren 54 auf. Das Einlegebauteil 80 ist beispielsweise aus Metall hergestellt. Das Einlegebauteil 80 ist mit dem Elektronikmodul 38 elektrisch leitfähig verbunden. Beispielsweise ist das Einlegebauteil 80 mit dem Elektronikmodul 38 mittels eines elastischen Kontakts 82, wie beispielsweise einer sogenannten S-Feder, elektrisch leitfähig verbunden. Die Verbindung des Einlegebauteils 80 mit dem elastischen Kontakt 82 kann dadurch realisiert sein, dass diese bereits bei der Herstellung des Elektronikraumdeckels 20 miteinander verbunden werden oder das Einlegebauteil 80 umspritzt wird und nachträglich ein Teil der Oberfläche 62 abgetragen wird, so dass der elastische Kontakt 82 mit dem Einlegebauteil 80 kontaktiert werden kann. Dabei kann der elastische Kontakt 82 im Wesentlichen horizontal, d.h. parallel zu dem Elektronikraumdeckel 20 bzw. dem Bodenblech 46, orientiert sein und mit einer aus einem elektrisch leitfähigen Material hergestellten Anschlagsfläche 84 verbunden sein, die wiederum mittels eines elektrisch leitfähigen Klebstoffs 74 mit dem Massekontakt 76 verbunden ist.

Figur 10 zeigt eine Querschnittsansicht eines Sensors 10 gemäß einer sechsten Ausführungsform der vorliegenden Erfindung. Nachstehend werden lediglich die Unterschiede zu der fünften Ausführungsform beschrieben und gleiche Bauteile sind mit gleichen Bezugszeichen versehen. Bei dem Sensor 10 der sechsten Ausführungsform wird auf die fünfte Ausführungsform zurückgegriffen. Der Unterschied besteht darin, dass der elastische Kontakt 82 vertikal orientiert ist, d.h. senkrecht zu dem Elektronikraumdeckel 20 bzw. dem Bodenblech 46, und unmittelbar mit dem Massekontakt 76 verbunden ist.

## Patentansprüche

1. Sensor (10) zur Bestimmung wenigstens eines Parameters eines durch einen Messkanal (30) strömenden fluiden Mediums, insbesondere eines Ansaugluftmassenstroms einer Brennkraftmaschine, wobei der Sensor (10) ein Sensorgehäuse (12), insbesondere einen in ein Strömungsrohr eingebrachten oder einbringbaren Steckfühler, in dem der Messkanal (30) ausgebildet ist, und mindestens einen in dem Messkanal (30) angeordneten Sensorchip (42) zur Bestimmung des Parameters des fluiden Mediums aufweist, wobei das Sensorgehäuse (12) einen Elektronikraum (18) zur Aufnahme eines Elektronikmoduls (38) und einen Elektronikraumdeckel (20) zum Verschließen des Elektronikraums (18) aufweist, wobei das Elektronikmodul (38) in den Elektronikraum (18) eingebracht ist,
wobei der Elektronikraumdeckel (20) zumindest teilweise elektrisch leitfähige Eigenschaften aufweist, wobei das Elektronikmodul (38) mit einem Inneren (54) des Elektronikraumdeckels (20) elektrisch leitfähig verbunden ist, wobei das Elektronikmodul (38) ein Bodenblech (46) aufweist, wobei das Bodenblech (46) mit dem Inneren (54) des Elektronikraumdeckels (20) elektrisch leitfähig verbunden ist, **dadurch gekennzeichnet, dass** das Bodenblech (46) mit dem Inneren (54) des Elektronikraumdeckels (20) kombiniert mit einem zumindest teilweisen Materialabtrag einer Oberfläche (62) des Elektronikraumdeckels (20) verbunden ist, indem entweder
- der Elektronikraumdeckel (20) einen mit einem Loch (58) versehenen Vorsprung (56) und das Bodenblech (46) einen Kontaktpin (60) aufweist, wobei der Durchmesser des Kontaktpins (60) größer als der Durchmesser des Lochs (58) ist und der Kontaktpin (60) eine Spritzhaut oder Oberfläche (62) des Elektronikraumdeckels (20) anritzt, oder
- der Elektronikraumdeckel (20) einen Vorsprung (56) und das Bodenblech (46) eine scharfkantige Nut (66) aufweist, wobei eine Breite der Nut (66) kleiner oder gleich groß wie eine Breite des Vorsprungs (56) ist und der Vorsprung (56) in die Nut (66) mittels einer Pressverbindung kontaktiert ist und die scharfkantige Nut (66) den Vorsprung (56) außen anritzt, oder
- der Elektronikraumdeckel (20) einen Vorsprung (56) und das Bodenblech eine scharfkantige Stanzkante (70) aufweist, wobei die scharfkantige Stanzkante (70) eine Seitenfläche des Vorsprungs (58) anritzt.

2. Sensor (10) nach dem vorhergehenden Anspruch, wobei das Bodenblech (46) auf ein festes Potenzial (72) gesetzt ist.

3. Sensor (10) nach dem vorhergehenden Anspruch, wobei das Bodenblech (46) mit dem festen Potenzial (72) mittels eines elektrisch leitfähigen Klebstoffs (74) oder mittels Drahtbonding (78) verbunden ist.

## Claims

1. Sensor (10) for determining at least one parameter of a fluid medium flowing through a measurement channel (30), in particular an intake air mass flow of an internal combustion engine, wherein the sensor (10) has a sensor housing (12), in particular a plug-in sensor which is inserted or able to be inserted into a flow pipe and in which the measurement channel (30) is formed, and at least one sensor chip (42), arranged in the measurement channel (30), for determining the parameter of the fluid medium, wherein the sensor housing (12) has an electronics compartment (18) for receiving an electronics module (38) and has an electronics compartment cover (20) for closing off the electronics compartment (18), wherein the electronics module (38) is inserted into the electronics compartment (18), wherein the electronics compartment cover (20) at least partially has electrically conductive properties, wherein the electronics module (38) is electrically conductively connected to an inside (54) of the electronics compartment cover (20), wherein the electronics module (38) has a base plate (46), wherein the base plate (46) is electrically conductively connected to the inside (54) of the electronics compartment cover (20), **characterized in that** the base plate (46) is connected to the inside (54) of the electronics compartment cover (20) such that it is combined with an at least partial material removal from a surface (62) of the electronics compartment cover (20), whereby either
- the electronics compartment cover (20) has a projection (56) provided with a hole (58) and the base plate (46) has a contact pin (60), wherein the diameter of the contact pin (60) is greater than the diameter of the hole (58) and the contact pin (60) scratches an injection-moulded skin or surface (62) of the electronics compartment cover (20), or
- the electronics compartment cover (20) has a projection (56) and the base plate (46) has a sharp-edged groove (66), wherein a width of the groove (66) is less than or equal to a width of the projection (56) and the projection (56) is contacted into the groove (66) by means of a press fit and the sharp-edged groove (66) scratches the outside of the projection (56), or
- the electronics compartment cover (20) has a projection (56) and the base plate has a sharp-edged punched edge (70), wherein the sharp-edged punched edge (70) scratches a side surface of the projection (58).

2. Sensor (10) according to the preceding claim, wherein the base plate (46) is set to a fixed potential (72).

3. Sensor (10) according to the preceding claim, wherein the base plate (46) is connected to the fixed potential (72) by means of an electrically conductive adhesive (74) or by means of wire bonding (78).

## Revendications

1. Capteur (10) permettant de déterminer au moins un paramètre d'un milieu fluide s'écoulant dans un conduit de mesure (30), en particulier d'un débit massique d'air d'aspiration d'un moteur à combustion interne, dans lequel le capteur (10) présente un boîtier de capteur (12), en particulier une sonde à piquer introduite ou pouvant être introduite dans un tube d'écoulement et dans laquelle est réalisé le conduit de mesure (30), et au moins une puce de capteur (42) disposée dans le conduit de mesure (30) pour déterminer le paramètre du milieu fluide, dans lequel le boîtier de capteur (12) présente un compartiment électronique (18) pour recevoir un module électronique (38) et un couvercle de compartiment électronique (20) pour fermer le compartiment électronique (18), dans lequel le module électronique (38) est introduit dans le compartiment électronique (18), dans lequel le couvercle de compartiment électronique (20) présente au moins en partie des propriétés de conductivité électrique, dans lequel le module électronique (38) est relié de manière électriquement conductrice à un espace intérieur (54) du couvercle de compartiment électronique (20), dans lequel le module électronique (38) présente une tôle de fond (46), dans lequel la tôle de fond (46) est reliée de manière électriquement conductrice à l'espace intérieur (54) du couvercle de compartiment électronique (20),
**caractérisé en ce que** la tôle de fond (46) est reliée à l'espace intérieur (54) du couvercle de compartiment électronique (20) en combinaison avec un enlèvement de copeaux au moins partiel d'une surface (62) du couvercle de compartiment électronique (20), **en ce que**
- le couvercle de compartiment électronique (20) présente une saillie (56) munie d'un trou (58), et la tôle de fond (46) présente une broche de contact (60), dans lequel le diamètre de la broche de contact (60) est supérieur au diamètre du trou (58), et la broche de contact (60) érafle une peau d'injection ou une surface (62) du couvercle de compartiment électronique (20), ou
- le couvercle de compartiment électronique (20) présente une saillie (56), et la tôle de fond (46) présente une rainure à arêtes vives (66), dans lequel une largeur de la rainure (66) est inférieure ou égale à une largeur de la saillie (56) et la saillie (56) est mise en contact dans la rainure (66) au moyen d'un assemblage serré, et la rainure à arêtes vives (66) érafle la saillie (56) à l'extérieur, ou
- le couvercle de compartiment électronique (20) présente une saillie (56), et la tôle de fond présente une arête d'estampage à arêtes vives (70), dans lequel l'arête d'estampage à arêtes vives (70) érafle une surface latérale de la saillie (58).

2. Capteur (10) selon la revendication précédente, dans lequel la tôle de fond (46) est réglée sur un potentiel fixe (72).

3. Capteur (10) selon la revendication précédente, dans lequel la tôle de fond (46) est reliée au potentiel fixe (72) au moyen d'une colle électriquement conductrice (74) ou au moyen d'un câble par fil (78).
